# FASCICULE DE BREVET EUROPEEN

(11) **EP 0 297 964 B1**
(45) Date de publication et mention de la délivrance du brevet: **10.08.1994**
(21) Numéro de dépôt: 88401627.0
(22) Date de dépôt: 27.06.1988
(51) Int. Cl.: G06F 13/38, G06F 15/46

(54) **Procédé de pilotage d'équipements par l'intermédiaire d'un réseau local, notamment pour l'automatisation d'un atelier**
Verfahren zur Steuerung von Vorrichtungen durch ein lokales Netzwerk, insbesondere zur Automatisierung einer Werkstatt
Procedure for equipment control through a local network, especially for automation of a workshop

(30) Priorité: 02.07.1987 FR 8709382
(43) Date de publication de la demande: 04.01.1989
(73) Titulaire: BULL S.A., 92800 Puteaux (FR)
(72) Inventeur: Gimza, Jean-Luc, F-75016 Paris (FR)
(74) Mandataire: Denis, Hervé

(56) Documents cités:
- US-A- 4 093 981
- ELEKTRONIK, vol. 35, no. 20, octobre 1986, pages 128-132; E. SEGL:"Zellenstruktur am MAP-Backbone"
- AUTOMATISIERUNGSTECHNISCHE PRAXIS ATP., vol. 28, no. 3, 1986, pages 109-116; T.PFEIFER et al.: "Derzeitige Situation und Chancen von MAP"
- SPECIAL REPORT ON DATA COMMUNICATIONS, vol. 23, no. 2, février 1984, pages 215-223; J.A. FONTAINE: "Controller and micro team up for smart ethernet node"

## Description

L'invention se rapporte à un procédé de pilotage d'équipements par l'intermédiaire d'un réseau local, notamment pour l'automatisation d'un atelier. Elle concerne plus particulièrement l'automatisation des postes de travail associés à des équipements d'un atelier.

Un poste de travail simple, ou isolé, est fait d'une console destinée à un opérateur et associée parfois à des accessoires tels que des lecteurs de code à barres. Ce poste de travail est relié à un centre de pilotage comprenant habituellement un ou plusieurs ordinateurs associés à des serveurs de données ou d'archivage (archive server) et à des moniteurs dédiés internes. Un poste de travail analogue peut être associé au calculateur de commande d'une machine de l'atelier. L'ensemble de la machine et du calculateur pourvu de son poste de travail constitue un équipement. L'ensemble des postes de travail, associés ou non à des équipements et reliés au centre de pilotage d'un atelier, constitue un système de pilotage pour l'automatisation de l'atelier.

Dans un équipement, le dialogue entre la console du poste de travail et le calculateur dépend du logiciel du calculateur. Il est conçu pour remplir des fonctions très spécifiques et pour rendre l'équipement performant. Il est donc ordinairement très élaboré. Le calculateur est aussi pourvu d'une ligne de communication avec l'extérieur. La ligne est souvent une ligne asynchrone. Cependant, la tendance est d'équiper le calculateur d'une ligne de grand débit pouvant se connecter directement sur un réseau local. Par conséquent, les possibilités de dialogue offertes par la ligne de communication du calculateur sont très variables, allant du plus simple au plus élaboré selon l'équipement. Mais actuellement, ces possibilités sont souvent limitées à cause de la seule présence d'une ligne asynchrone. Le calculateur peut disposer aussi d'une unité de stockage faite de disques, de disquettes ou de bandes.

Le système de pilotage actuellement le plus performant emploie un réseau local reliant les équipements au centre de pilotage. Il existe plusieurs types de réseaux locaux. Par example, un type bien connu utilise la technique de transmission dite CSMA/CD (Carrier Sense Multiple Access/Collision Detection), tel que le réseau "Ethernet". Son application à l'industrie posa cependant de sérieux inconvénients. On utilise donc plus couramment dans l'industrie un réseau local utilisant la technique du jeton (token bus), tel que le réseau MAP (Manufacturing Automation Protocol).

En matière de réseau local, l'ISO (International Standard Organisation) a défini actuellement un modèle d'interconnexion des systèmes ouverts, dit modèle OSI (Open Systems Interconnect) définissant sept couches. La plupart des réseaux actuels, tels que ceux basés sur le réseau Ethernet, s'appuient sur les services des couches basses du modèle OSI. Les applications utilisent généralement les services offerts par la quatrième couche, appelée "transport" et la cinquième couche, appelée "session". Enfin, les réseaux industriels tels que le réseau MAP commencent à offrir des services normalisés dans la sixième couche, dite "présentation", ainsi que dans la septième et dernière couche, dite "application".

Naturellement, il serait souhaitable de pouvoir connecter tous les postes de travail d'un atelier, associés ou non à des équipements, à un réseau local pour obtenir une automatisation très performante de cet atelier. Cependant, les difficultés rencontrées sont grandes et variées. Il s'avère souvent en effet que dans un atelier de grande envergure, tel que par exemple un atelier de fabrication de cartes de circuits imprimés et de montage de composants sur les cartes, les équipement existants ou futurs sont très hétérogènes au niveau des processeurs, des systèmes d'exploitation ou des moniteurs dédiés internes. Dans ce cas, chaque équipement pose un problème spécifique. L'adjonction de simples postes de travail ajoute encore d'autres problèmes spécifiques.

Dans un système de pilotage, les postes de travail simples sont connectés directement au centre de pilotage. Le centre de pilotage doit donc gérer directement chacun des postes de travail simples. Cette prise en charge par le centre de pilotage est lourde et doit être adaptée au nombre et à la spécificité des postes de travail. A cause de cette charge de gestion, il est par exemple impossible de transmettre à un poste de travail simple des documents représentant un texte associé à des dessins et/ou des images, tels que des documents complexes numérisés. Pourtant, un poste de travail simple peut avoir besoin de telles données.

Les problèmes liés au pilotage d'équipements d'un atelier dépendent du type de ces équipements. Ils diffèrent selon que les équipements ne sont pas directement connectables à un réseau local, ou sont immédiatement connectables ou déjà connectés à un réseau local.

Etant donné que l'extension des réseaux locaux à l'automatisation d'ateliers déjà constitués est relativement récente, de nombreux équipements de ces ateliers n'ont pas été conçus pour être connectés à un réseau local. Dans un équipement de ce type, le calculateur est simplement ouvert vers l'extérieur par une ligne de communication asynchrone. Cette ligne fournit une liaison de faible débit et doit être connectée directement à l'ensemble des serveurs de données du centre de pilotage. Il faut donc adapter le logiciel de l'ensemble de serveurs de données en fonction de l'équipement connecté. Cette adaptation en elle-même est déjà longue et coûteuse. De plus, les équipements de ce type ont en général des logiciels et des protocoles de dialogue différents. Par conséquent, l'adjonction d'un équipement de type différent oblige la modification sur le fond du logiciel de l'ensemble de serveurs de données.

Les équipements connectables ou déjà connectés à un réseau local posent aussi des problèmes pour leur pilotage à travers ce réseau local. Ces problèmes se retrouvent aussi souvent pour le pilotage des équipements du type précédent. Par exemple, un équipement dont le calculateur ne dispose pas de programmes locaux doit chercher des programmes dans un serveur de données du centre de pilotage. Ainsi, si le serveur tombe en panne, il bloque tous les équipements de ce type. D'autre part, le dialogue entre l'opérateur et l'extérieur se fait couramment par menus. Le dialogue requiert donc un nombre important d'opérations souvent délicates et nuit ainsi à la productivité du poste de travail associé. D'autres problèmes sont liés à l'échelle de fabrication de l'atelier. Pour un travail sur de grandes séries, les programmes de base sont normalement sur disques et les programmes supplémentaires transitent par la ligne de communication pour être stockés localement sur plusieurs média (disques ou disquettes). L'acheminement dépend ainsi de la qualité de la ligne et surtout de sa disponibilité. Lorsque le pilotage porte sur de petites séries nécessitant un grand nombre de références, le pilotage requiert un grand nombre de manipulations. Il comporte ainsi de nombreux temps morts et implique une gestion complexe des disques et disquettes et leur mise à jour. Il fait apparaître la notion de transparence au niveau des fichiers utilisés et pose le problème général d'archivage, de sauvegarde et de gestion de l'état technique sur chaque poste ou type de postes.

Un procédé de pilotage d'équipements par l'intermédiaire d'un réseau local pour l'automatisation d'un atelier est décrit dans un article de la revue Electronik, vol. 35, n° 20. octobre 1986, pages 128-132, de Edmund Segl et intitulé "Zellenstruktur am MAP-Backbone". Plus précisément, cet article décrit un procédé de pilotage à partir d'un centre de potage d'au moins un équipement par l'intermédiaire d'un réseau local d'un système de pilotage, l'équipement incluant un calculateur pourvu d'une ligne de communication, consistant à disposer une unité locale d'interface comprenant une unité locale de stockage et un bloc de traitement qui relie la ligne de communication de l'équipement au réseau local par l'intermédiaire d'une ligne de communication directe avec le réseau local et à faire un contrôle du calculateur de l'équipement par l'intermédiaire de la ligne de communication. le contrôle étant fait par le bloc de traitement connecté à un poste de travail local et consistant à attribuer à l'unité locale d'interface la gestion du catalogue des fichiers utilisés par le calculateur de l'équipement, à stocker dans l'unité locale de stockage une copie de fichiers contenus dans le centre de potage et/ou à envoyer dans le centre de pilotage des fichiers issus de l'unité locale d'interface. Cependant, la gestion du transfert des fichiers selon ce procédé de pilotage n'est pas suffisamment automatisée et s'avère donc lourde et coûteuse en temps.

L'invention remédie à tous ces inconvénients, grâce à une interface standard formée entre le réseau local et les postes de travail de l'atelier, associés à des équipements.

L'invention a pour objet un procédé de pilotage à partir d'un centre de pilotage d'au moins un équipement par l'intermédiaire d'un réseau local d'un système de pilotage, ce procédé étant défini dans la revendication 1.

Les caractéristiques et avantages de l'invention ressortiront de la description qui suit, donnée à titre d'exemple et faite en référence aux dessins annexés.

Dans les dessins :
- la figure 1 est une vue synoptique d'un atelier automatisé conformément à l'invention ;
- la figure 2 est une vue schématique d'un exemple d'équipement classique ;
- la figure 3 est une vue schématique d'un exemple d'équipement représenté sur la figure 2 et associé à une unité locale d'interface conforme à l'invention ;
- la figure 4 est un diagramme représentant les fonctionnalités générales de l'unité locale d'interface illustrée dans la figure 3 ;
- la figure 5 est une vue schématique de structure du système d'exploitation du calculateur d'un équipement qui est pourvu d'une liaison d'origine connectable à un réseau local et qui est associé conformément à l'invention à une unité locale d'interface connectée au réseau local par l'intermédiaire de la liaison d'origine de l'équipement ;
- la figure 6 illustre schématiquement la structure d'un message utilisé par l'équipement et l'unité locale représentés sur la figure 5 ; et
- la figure 7 est un organigramme représentant un exemple d'enchaînement d'écrans sur le poste de travail d'une unité locale d'interface conforme à l'invention.

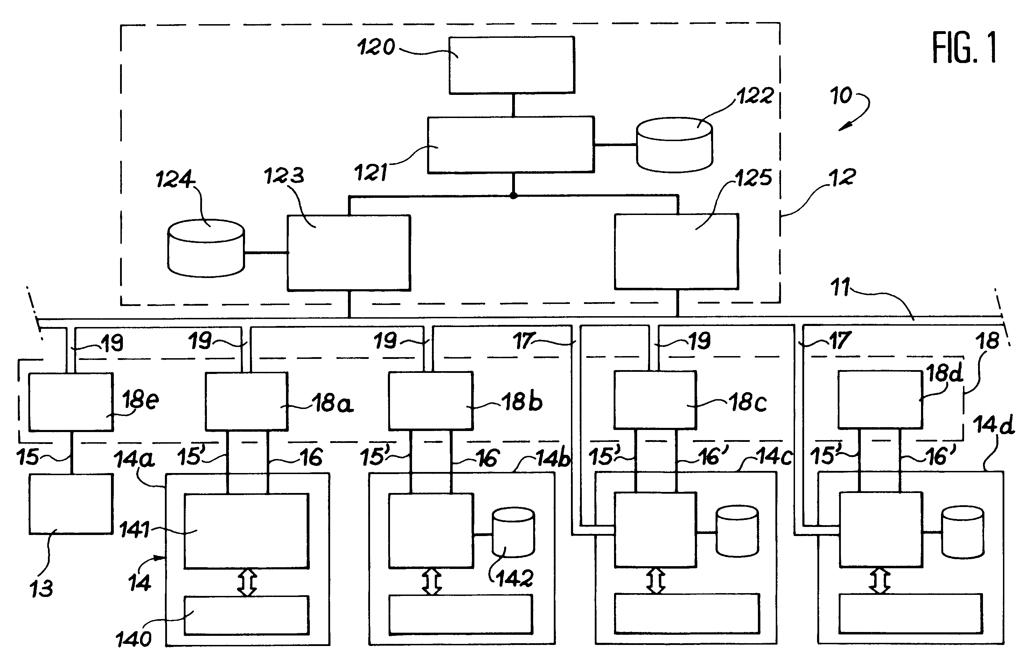

La figure 1 illustre un système de pilotage 10 conforme à l'invention. Le système de pilotage 10 est conçu autour d'un réseau local 11 de type quelconque, de préférence un réseau classique industriel du type MAP. De manière classique, un centre de pilotage 12 est connecté au réseau local 11. Le centre de pilotage 12 a une structure classique et se compose par exemple d'un centre de gestion 120 attaché à un calculateur de pilotage 121 auquel sont connectés une mémoire centrale 122, un ensemble de serveurs de données 123 associé à une unité de mémoire 124, et un ensemble 125 de moniteurs dédiés à des applications locales. Enfin, le système de pilotage 10 illustré comporte un poste de travail simple ou isolé 13 et des équipements 14 de quatre types différents (14a, 14b, 14c, 14d).

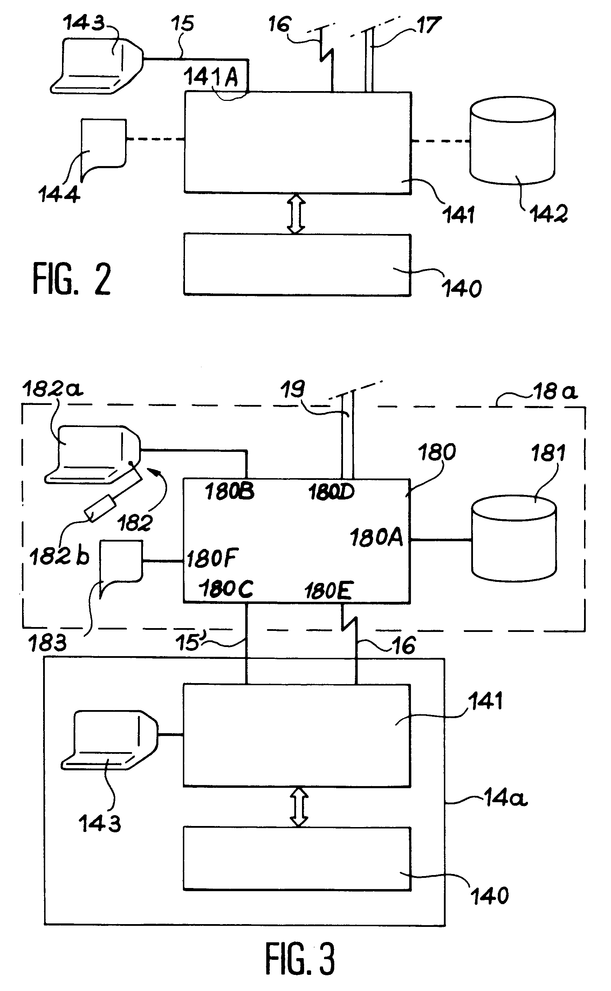

La figure 2 illustre schématiquement la structure générale classique d'un équipement 14. Un équipement 14 se compose essentiellement d'une machine 140 connectée à un calculateur 141 éventuellement associé à une unité de stockage 142. L'éventualité de la connexion entre le calculateur 141 et l'unité de stockage 142 est représentée par un trait tireté. Le calculateur 141 présente une borne d'entrée-sortie de terminal 141A reliée à au moins un poste de travail 143 par une liaison 15. Le calculateur 141 est ouvert vers l'extérieur par l'intermédiaire d'une ligne de communication, telle qu'une ligne asynchrone 16 ou une ligne 17 adaptée à communiquer directement avec un réseau local grâce à une interface propre au calculateur. Les équipements 14a et 14b de la figure 1 sont supposées avoir seulement à l'origine la ligne asynchrone 16, tandis que la ligne 17 est propre aux équipements 14c et 14d. Eventuellement, une imprimante 144 est associée au calculateur 141.

D'autre part, le poste de travail simple 13 est relié de manière classique par l'intermédiaire d'une liaison 15 au centre de pilotage 12. La liaison 15 est de même nature que la liaison 15 associant un poste de travail 143 au calculateur 141 d'un équipement classique 14.

L'invention va maintenant être décrite en référence aux figures 1, 3, 4 et 5.

En référence à la figure 1, l'invention consiste à associer le poste de travail simple 13 ou le poste de travail 143 d'un équipement 14 à une unité locale d'interface. Les unités locales d'interface 18a-18d se rapportent respectivement aux équipements 14a-14d, et l'unité locale d'interface 18e se rapporte au poste de travail simple 13. Les unités locales d'interface 18a-18e sont faites chacune d'un matériel et d'un logiciel standards de grande diffusion. On entend par matériel standard de grande diffusion un ordinateur universel du type ordinateur personnel ou compatible. L'ensemble des unités locales forme ainsi une interface standard 18 conforme à l'invention.

D'une manière générale, le procédé de pilotage conforme à l'invention d'un poste de travail 13 ou 143 relié à un centre de pilotage 12 par l'intermédiaire d'une liaison 15 est donc d'abord caractérisé en ce qu'il consiste à associer le poste de travail 143, 13 à une unité d'interface respective 18a-18e faite d'un matériel et d'un logiciel standards de grande diffusion et reliée au centre de pilotage 12 par le réseau local 11. L'association est à entendre dans son sens logique et non physique, comme cela ressortira clairement de la description qui suit.

D'autre part, les réseaux locaux actuels sont très variés et fonctionnent en général selon des schémas eux-mêmes variés. Le procédé conforme à l'invention consiste en outre amener chaque poste de travail 13, 143, 182 dans un schéma conforme à un même modèle normalisé permettant de faire avec l'unité locale d'interface respective 18a-18e des développements spécifiques au sein de ce modèle. Le modèle préféré de l'invention est le modèle OSI de l'ISO. Habituellement les schémas actuels fonctionnent au niveau des quatrième et cinquième couches du modèle OSI de l'ISO. Le procédé conforme à l'invention consiste alors à amener les postes de travail dans un schéma conforme au modèle OSI et de faire avec l'unité locale d'interface respective des développements spécifiques au niveau de la couche application du modèle OSI.

Il est clair que les développements spécifiques dans la couche application peuvent aussi être faits dans la couche présentation du modèle OSI. Si le réseau local 11 est évolué, du type réseau local industriel à jeton, il permet actuellement des développements standards au niveau de la couche application du modèle OSI. Dans ce cas, le procédé conforme à l'invention consiste à faire dans cette couche des développements spécifiques, complémentaires aux développements standards disponibles sur le réseau. Des exemples d'applications spécifiques seront donnés ultérieurement.

La figure 3 illustre la structure de l'unité locale 18a associée conformément à l'invention au poste de travail 143 de l'équipement 14a représenté sur la figure 1. L'équipement 14a est une équipement classique, tel que représenté sur la figure 2, dans lequel il n'y a pas de liaison 17 et d'unité de stockage 142. L'unité locale d'interface 18a est formée essentiellement d'un bloc de traitement 180 connecté par une borne d'entrée-sortie 180A à une unité de stockage 181. Le bloc de traitement 180 est fait d'un matériel et d'un logiciel standards de grande diffusion. Le bloc de traitement 180 est aussi connecté par une borne d'entrée-sortie 180B à un terminal 182 analogue au terminal 143. Le terminal 182 illustré se compose donc d'une console 182a et d'un lecteur de code à barres 182b. Dans un atelier automatisé conformément à l'invention, chaque unité locale était faite d'un matériel BM60 (Bull Micral). Une liaison logique de terminal 15′ est faite entre une borne d'émulation de terminal 180C du bloc de traitement 180 et la borne de terminal 141A du calculateur 141 (figure 2). Le bloc de traitement 180 comporte une borne d'entrée-sortie 180D connectée à une ligne de communication 19 adaptée à une connexion directe avec le réseau local 11. La ligne 19 est donc d'un type similaire à la ligne 17 indiquée dans l'équipement 14 illustré dans la figure 2. Le bloc de traitement 180 comporte enfin une borne d'entrée-sortie 180E recevant la ligne de communication asynchrone 16 du calculateur 141 de l'équipement 14a. La borne 180E est donc une borne d'émulation de communication. Eventuellement, le bloc de traitement 180 peut encore avoir une borne d'entrée-sortie 180F pour une connexion avec une imprimante 183. Il est à noter que dans certains équipements une même ligne physique de communication peut jouer le rôle de la liaison (logique) de terminal 15′ et de la ligne (logique) 16.

Le principe de l'invention consiste donc à associer, dans le sens logique du terme, le poste de travail 143 du calculateur 141 de l'équipement 14a au poste de travail 182 de l'unité locale 18a servant d'interface standard avec le réseau local 11 connecté au centre de pilotage 12. Grâce à cette association, les tâches affectées originellement au poste de travail 143 sont ramenées au moins en partie au niveau de l'unité locale 18a. Dans cette unité locale, certaines tâches sont exécutées automatiquement par le bloc de traitement 180. Dans la mesure du possible, toutes les tâches exécutables automatiquement seront ramenées au niveau de l'unité locale 18a pour y être traitées. Une illustration en est donnée ultérieurement. Les autres tâches sont présentées à l'opérateur sur l'écran de la console 182a. A la limite, toutes les tâches initialament destinées au poste de travail 143 seront avantageusement transférées de manière logique à l'unité locale 18a et au poste de travail 182 associé. Ce poste de travail se substitue donc entièrement au poste de travail associé à l'origine à l'équipement 14a. Dans ce cas, la liaison 15 peut être appliquée directement à la borne 180C du bloc de traitement 180 de l'unité locale et tenir le rôle de la liaison 15′.

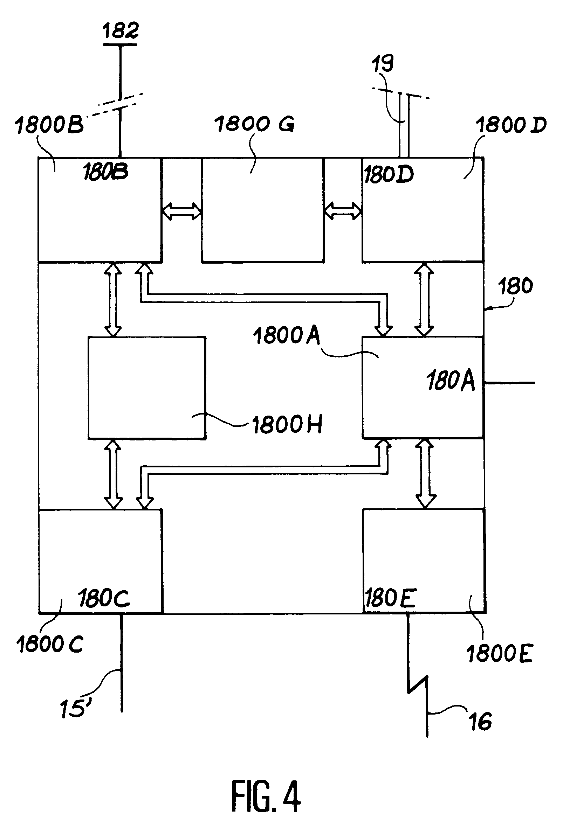

La figure 4 illustre les éléments fonctionnels principaux du bloc local 180a de l'unité locale 18a. Les cinq bornes 180 A, B, C, D et E sont respectivement associées à cinq élements, constituant respectivement une interface de stockage 1800A, une interface opérateur 1800B, une interface terminal 1800C, une interface réseau 1800D et une interface communication 1800E. L'interface opérateur 1800B est reliée à l'interface réseau 1800D par l'intermédiaire d'une interface centre de pilotage 1800G. L'interface opérateur 1800B est reliée à l'interface terminal 1800C par l'intermédiaire d'un élément 1800H de contrôle de l'équipement 14a. Enfin, l'interface de stockage 1800A est reliée directement à l'interface opérateur 1800B, à l'interface réseau 1800D, à l'interface terminal 1800C et à l'interface communication 1800E.

Le principe de fonctionnement de l'équipement 14a associé à son unité locale 18a est le suivant. D'une part, il est fait en sorte que le logiciel utilisé de façon standard dans le bloc de traitement 180a de l'unité locale 18a est indépendant du logiciel qui est propre au fonctionnement de l'équipement 14a et mis en oeuvre seulement par le calculateur 141 (pour la machine par exemple). D'autre part, le bloc de traitement 180 de l'unité locale est adapté pour contrôler au moins en partie le calculateur 141 de l'équipement 14a par l'intermédiaire de la ligne de communication 16. Eventuellement, la liaison de terminal 15′ peut aussi être utilisée pour faire ce contrôle. Le contrôle partiel du calculateur par la poste de travail 182 de l'unité locale d'interface réalise l'association, dans le sens logique du terme, avec le poste de travail 143 de l'équipement 14a. Cependant, comme cela a été dit précédement, le bloc de traitement contrôle avantageusement le fonctionnement de l'équipement, tout au moins en mode normal. Les autres modes de fonctionnement décrits ultérieurement pourraient être laissés au poste de travail 143.

Dans le cas de l'équipement 14a, dont le calculateur 141 est dépourvu d'unité de stockage, l'unité locale 18a procure au calculateur 141 l'unité de stockage 181 et relie le calculateur 141 et l'unité de stockage 181 au réseau local 11. En fonctionnement, l'invention consiste à envoyer dans l'unité de stockage 181 une copie de programmes contenus dans l'ensemble de serveurs 123 du centre de pilotage 12, et à attribuer à l'unité locale 18a la gestion du catalogue des fichiers utilisés par le calculateur 141 de l'équipement 14a. Le fonctionnement détaillé de l'équipement 14a dans l'environnement du système de pilotage 10 conforme à l'invention va maintenant être décrit.

On appelle programme pièce un programme particulier correspondant à un produit donné manipulé dans l'atelier 10. Ce peut être par exemple un programme de test, un programme de vérification, ou une opération particulière faite sur le produit. D'une manière générale, les programmes pièces ont leur original archivés dans l'ensemble de serveurs de données 123. Les sauvegardes de ces originaux sont donc effectuées dans cet ensemble de serveurs de données. Selon l'invention, les programmes disponibles au niveau du poste de travail 182 sont des copies qui ont été délivrées sur demande de ces postes et stockées dans l'unité 181. L'unité de stockage 181 peut ainsi être assimilée à une antémémoire dans un ensemble équivalant à une architecture multiprocesseur ayant le réseau local 11 pour bus et l'unité locale de stockage 181 comme élément spécialisé du multiprocesseur. Il est clair cependant que la probabilité de disposer localement du ou des programmes pièces nécessaires pour exécuter le travail initialisé par l'opérateur au poste de travail 182 varie en fonction des capacités de l'unité locale de stockage 181 et de la taille des programmes utilisés par l'équipement 14a.

D'autre part, tout message du système automatisé de l'atelier 10 répondant à l'initialisation d'un traitement par un opérateur au poste de travail 182 contient les noms des outillages logiques et physiques à utiliser. Les programmes pièces correspondants, qui ne sont pas disponibles dans l'unité locale de stockage 181, sont appelés par l'unité locale 18a pour leur télé-chargement. Ainsi, le transfert de fichiers entre l'ensemble des serveurs de données 123 et le poste de travail 182 est géré automatiquement par l'unité locale d'interface de façon totalement transparente pour l'opérateur opérant sur un tel poste de travail. Un fonctionnement analogue aux programmes pièces est fait au niveau des fichiers décrivant des documents à afficher sur les postes de travail. Enfin, l'unité locale 18a gère un dictionnaire des programmes pièces. Le but principal est d'initialiser un transfert si le fichier n'est pas présent dans l'unité locale de stockage 181. Il sera avantageux aussi que cette gestion soit faite pour appliquer une stratégie d'effacement des fichiers qui ont le moins de chance d'être réutilisés dans un avenir proche lorsqu'un problème de place se pose au niveau de l'unité locale de stockage 181.

Par ailleurs, le bloc de traitement 180 de l'unité locale d'interface 18a permet de distinguer les informations qui doivent être imprimées de celles qui peuvent être conservées en mémoire. Les informations à imprimer peuvent être prises en charge par l'imprimante 144 de l'équipement classique tel que représenté sur la figure 2. Elles peuvent aussi être prises en charge en partie ou totalement par l'imprimante 182 de l'unité locale d'interface 18a.

Sachant que l'équipement 14a adapté par l'unité locale 18a conformément à l'invention est un équipement souvent rudimentaire et peu performant, dépourvu d'unité de stockage et ne comportant qu'une simple ligne de communication asynchrone, l'unité locale 18a doit avoir toutes les fonctionnalités requises pour suppléer ou s'adapter aux faibles performances de l'équipement 14a. Les fonctionnalités décrites précédemment illustrent toutes les possibilités offertes par l'invention. On comprend cependant que plus l'équipement est évolué et performant, plus les fonctionnalités de l'unité locale correspondante peuvent être sélectives et améliorées en conséquence. Plusieurs exemples d'équipements classiques plus évolués sont suggérés dans la figure 2. La figure 1 illustre schématiquement l'adaptation conforme à l'invention de ces équipements plus évolués. On considérera successivement l'équipement 14b et son unité locale 18b, puis l'équipement 14c et son unité locale 18c, et enfin l'équipement 14d et son unité locale 18d.

L'équipement 14b et son unité locale 18b correspondent à l'adaption conforme à l'invention de l'équipement conventionnel tel que représenté sur la figure 2, dont le calculateur 141 est pourvu de l'unité de stockage 142 et seulement de la ligne asynchrone 16. L'équipement 14b diffère ainsi de l'équipement 14a par la présence de l'unité de stockage 142 associée au calculateur 141. Il ressort de la description précédente que les unités locales 18a et 18b ont essentiellement la même structure et les mêmes fonctionnalités. Cependant, l'unité locale 18b relie le calculateur 141 et son unité de stockage 142 dans l'équipement 14b au réseau local 11. La présence de l'unité de stockage 142 peut améliorer les performances de l'unité locale 18b par rapport à l'unité locale 18a. Ainsi, la copie de programmes contenus dans l'ensemble de serveurs de données 123 est stockée dans l'unité de stockage 142. En règle générale, le stockage local se fait en priorité dans l'unité de stockage 142 de l'équipement.

Enfin, l'unité locale 18b gère le catalogue de la même manière que l'unité locale 18a. Avantageusement, l'unité locale 18b aura dans son catalogue l'historique des fichiers issus de l'ensemble des serveurs de données 123 et contenus dans l'unité de stockage 142 et gèrera l'espace dans cette unité de stockage. Par conséquent, si par exemple il n'existe plus de place dans l'unité de stockage 142, l'unité locale 18b peut, grâce à sa connaissance de l'historique des fichiers, supprimer un ou plusieurs de ces fichiers pour avoir dans l'unité de stockage 142 la place suffisante pour le stockage requis d'un fichier. L'unité locale 18b peut disposer de statistiques d'utilisation des fichiers pour appliquer l'algorithme de leur élimination en cas de manque de place dans l'unité de stockage 142. Les fichiers qui ont le moins de chance d'être réutilisés dans un avenir proche peuvent alors être effacés. Bien entendu, l'unité locale 18b n'a pas une vue aussi fine que le calculateur 141 sur les volumes de stockage libérés dans l'unité 142. Par conséquent, cette stratégie d'élimination pourra conduire à éliminer un nombre de fichiers supérieur à l'espace désiré afin de ne pas retrouver le problème de place dans un avenir proche. D'autre part, la gestion du dictionnaire des fichiers par l'unité locale 18b inclura avantageusement la reconstitution, en cas d'incident, du dictionnaire de l'unité locale à partir du contenu de l'unité de stockage 142 de l'équipement 14b. Un autre avantage permis par l'unité locale 18b consiste en la lecture de fichiers contenus dans l'unité de stockage 142, concernant notamment des résultats obtenus par l'équipement ou des fichiers générés en auto-apprentissage ou mise au point sur l'équipement.

L'équipement 14c et son unité locale 18c, représentés sur la figure 1, sont l'adaptation conforme à l'invention d'un équipement classique tel que représenté sur la figure 2, dont le calculateur 141 est pourvu de l'unité de stockage 142 et de la ligne 17 au lieu de la ligne asynchrone 16.

La ligne 17 est adaptée au réseau local 11 par une interface propre au calculateur 141 et permet généralement des transferts à grand débit. L'équipement 14c adapté conformément à l'invention conserve la liaison initiale 17 avec le réseau local 11. Cependant, il y est ajouté une ligne de communication asynchrone additionnelle 16′ avec l'unité locale 18c. Dans ces conditions, l'unité locale 18c garde essentiellement la même structure et les mêmes fonctionnalités que celles de l'unité locale 18b. Autrement dit, l'unité locale est reliée au calculateur 141 de l'équipement 14c par la ligne 15′ et par la ligne asynchrone 16′ semblable à la ligne 16. L'unité locale 18c reste d'autre part reliée au réseau local 11 par la ligne 19. Cependant, les performances accrues du calculateur 141 de l'équipement 14c par rapport aux équipements précédemment décrits permettent d'améliorer encore les performances de l'unité locale correspondante 18c par rapport à l'unité locale 18b. Principalement, l'unité locale 18c profitera de la ligne d'origine 17 à grand débit pour accomplir en partie certaines tâches, alors que d'autres tâches pourront se faire simultanément en empruntant la ligne 19. Par exemple, il sera très profitable d'attribuer à l'unité locale 18c la gestion du catalogue et la préparation d'un transfert de données et à faire ce transfert sur la ligne d'origine 17. En d'autres termes, le transfert d'un fichier est ordonné par l'unité locale 18c mais se fait en court-circuitant cette unité locale. Celle-ci met seulement dans sa propre bibliothèque une indication du transfert. Les autres fonctionnalités de l'unité locale 18c peuvent être similaires à celles de l'unité locale 18b. Notamment, l'unité locale 18c aura dans son catalogue l'historique des fichiers issus de l'ensemble des serveurs de données 123 et contenus dans l'unité de stockage 142 de façon à gérer l'espace de cette unité de stockage.

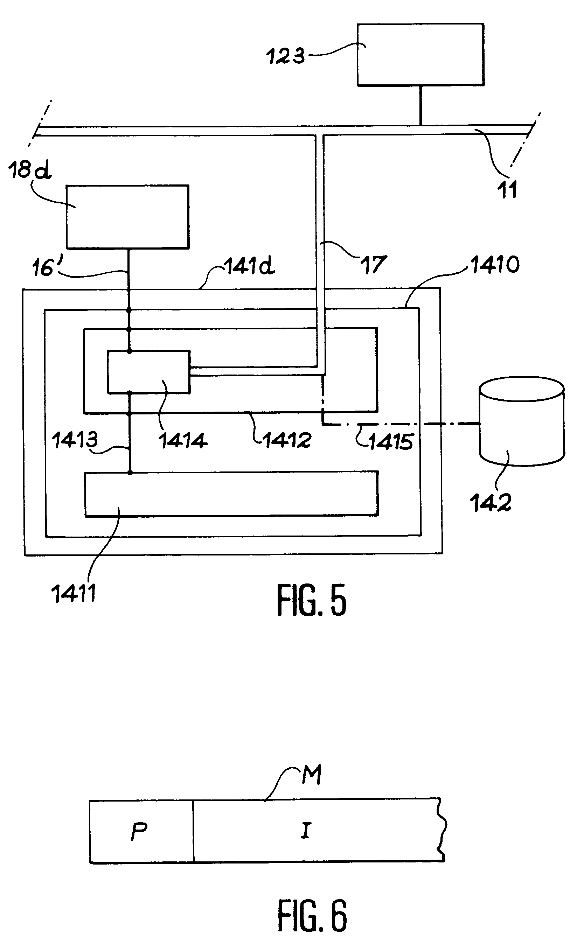

L'équipement 14d et son unité locale 18d, qui sont représentés sur la figure 1, constituent une variante de réalisation de l'équipement précédent 14c et de son unité locale 18c. En effet, les deux équipements 14c et 14d ont tous deux la ligne de communication d'origine 17. Selon la variante conforme à l'invention, la ligne d'origine 17 est maintenue et se substitue, dans l'unité locale 18d, à la ligne 19 qui était maintenue dans l'unité locale 18c. L'unité locale 18d n'a plus de ligne 19 et utilise seulement les lignes 15′, 16′ et 17. Dans cette configuration, l'unité locale 18d est simplement associée au calculateur 141 de l'équipement 14d. Le problème se pose alors de gérer les messages internes relatifs au pilotage de l'équipement et les messages externes destinés à transiter entre l'unité locale 18d et le réseau local 11. La figure 5 est une vue schématique des liaisons fonctionnelles entre le calculateur 141 de l'équipement 14d, l'unité locale associée 18d, la ligne 17, le réseau local 11 et l'ensemble des serveurs de données 123. La figure 6 illustre la structure d'un message pouvant être avantageusement utilisée dans la configuration de la figure 5.

En référence à la figure 5, la partie 1410 symbolise le système d'exploitation du calculateur 141 de l'équipement 14d. Le système d'exploitation 1410 se compose de plusieurs couches de logiciel, notamment d'une couche 1411 propre au pilotage de l'équipement et d'une couche 1412 d'interface avec l'unité locale 18d. La ligne 16′ de communication entre l'unité locale 18d et le calculateur 141 aboutit donc à la couche d'interface 1412. La couche d'interface 1412 est connectée de façon logique à la ligne 17 pour les messages externes et à la couche 1411 par l'intermédiaire d'une ligne logique de communication 1413 porteuse des messages internes. Conformément à l'invention, la couche d'interface 1412 inclut un dispositif logique d'aiguillage 1414 relié à la ligne 16′, à la ligne 17 et la ligne logique 1413. Le dispositif 1414 fait un aiguillage des données de façon à établir sélectivement un transfert entre l'unité locale 18d et les fonctions du calculateur propres à l'équipement 14d et contenues dans la couche 1411, et entre l'unité locale 18d et le réseau local 11 par l'intermédiaire de la ligne 17. Autrement dit, le dispositif d'aiguillage 1414 fait une sélection entre les messages externes et les messages internes. Avantageusement, tout message interne ou externe aura la structure telle que représentée dans la figure 6 par le message M. Le message M incorpore un préambule P servant d'indicateur de l'origine ou de la destination du message, et une partie information I représentative du contenu proprement dit du message. Par exemple, l'aiguillage sera fait en incorporant à tout message M issu de l'unité locale 18d un préambule P1 représentatif de la destination du message et à tout message destiné à l'unité locale un préambule P2 représentif de l'origine du message. Par ailleurs, comme indiqué en tireté à la figure 5, une ligne logique 1415 peut être établie entre l'ensemble de serveurs de données 123 et l'unité et l'unité de stockage de l'équipement 14d. Cette connexion est évidemment demandée par l'unité locale 18d et gérée ou contrôlée par la couche 1412.

Enfin, il reste l'unité locale d'interface 18e simplement rattachée au poste de travail 13. On comprend maintenant que l'unité locale d'interface 18e a la même structure que celle de l'unité 18a. Le poste de travail 13 correspond au poste de travail 182. La borne 180E du bloc de traitement 180 reste avantageusement disponible en vue d'une future connexion avec un équipement. Il est clair que le fonctionnement de l'unité 18e est similaire à celui de l'unité 18a, et procure une interface standard avec le réseau local 11 et le centre de pilotage 12 tout en donnant les ressources adaptées à l'évolution du poste de travail.

Il est à noter que la ligne 16 ou 16′ peut avantageusement être remplacée par une ligne synchrone ou de type connectable à un réseau local. La ligne 16 ou 16′ a été considérée comme une ligne de communication asynchrone à cause de la disponibilité d'une telle ligne sur les équipements actuels.

Les fonctionnalités d'une unité locale étant présentées, nous discuterons maintenant des divers modes de fonctionnement que peut avoir une unité locale, telle que l'unité 18a par exemple. En dehors d'un mode normal, il est possible de prévoir plusieurs autres modes, tels que ceux cités en exemple ci-après. Le mode normal correspond au travail normal d'un opérateur de production dans le cadre de l'atelier 10. D'une manière générale, ce travail comprend la connexion et la déconnexion du poste de travail au centre de pilotage 12 via le réseau local 11, l'ouverture et la fermeture du poste, l'identification de l'opérateur, la transmission des mouvements de l'opérateur, et au moins une opération à effectuer. Dans le cadre d'un atelier de fabrication de cartes de circuits imprimés et de montage de composants sur les cartes, l'opération peut être par exemple le traitement d'insertion de composants sur un lot de cartes de circuits imprimés. Etant donné qu'une unité locale conforme à l'invention est faite d'un matériel et d'un logiciel standards de grande diffusion, les opérations classiques autres que celle de l'opération donnée sont faites de façon ordinaire. Pour l'opération choisie, l'opérateur au poste de travail 182 utilise le lecteur de code à barres 182b pour lire le numéro du conteneur du lot pris en compte. Cette opération entraîne l'émission par l'unité locale d'un message vers le centre de pilotage 12 et, plus particulièrement, vers le calculateur central 121. Celui-ci envoie à l'unité locale 18a un message comprenant les informations qui permettent à l'unité locale de présenter les enchaînements d'écrans appropriés au traitement du lot et d'assurer les saisies d'informations et le contrôle de leur cohérence. En même temps, le centre de pilotage 12 transmet à l'unité locale 18a les références des programmes pièces et des documents (fiches d'instruction) à utiliser pour le traitement du lot. L'unité locale 18a charge dans la mémoire du calculateur 141 les programmes correspondant aux références reçues. Si ces programmes ne sont pas disponibles dans l'unité de stockage 181, l'unité locale les prélève dans l'ensemble des serveurs de données 123 pour les stocker localement (sur l'unité de stockage 181) et les charger dans la mémoire du calculateur 141. Ceci est fait automatiquement, de façon transparente pour l'opérateur. L'exécution du travail peut avoir lieu suivant ces programmes, avec si nécessaire un dialogue avec des applications locales de l'ensemble de moniteurs dédiés 125 du centre de pilotage 12. La clôture du traitement du lot se fait avec la transmission d'un compte-rendu au centre de pilotage 12.

Le système de pilotage 10 conforme à l'invention comportera aussi avantageusement un mode de fonctionnement appelé "méthodes". Ce mode consiste en un test de validité des programmes originaux contenus dans l'ensemble des serveurs de données 123.

Ce mode est accessible à partir de la lecture d'un code tel que "opérateur méthodes". Ce mode permet l'appel d'un programme pièce à tester. Le fichier relatif à ce programme pièce est chargé dans l'unité locale correspondante, sans possibilité d'utilisation en mode normal. La validation du programme pièce est établie. Dans ce mode, un programme pièce produit ou modifié localement peut être stocké dans l'ensemble de serveur de données 123. Chaque fois que cela est possible, une émulation de la console de l'équipement est faite par la console 182 de l'unité locale correspondante. La bibliothèque des programmes pièces contenus dans l'unité de stockage 142 de l'équipement correspondant peut être reconstituée dans l'unité de stockage 181 de l'unité 18 associée. Le temps d'exécution d'un test sera avantageusement enregistré.

Il peut encore exister un mode relatif à la maintenance. Ce mode est accessible à partir de la lecture d'un code tel que "opérateur maintenance". Ce mode doit offrir des fonctions de maintenance en amont, c'est-à-dire vers le centre de pilotage 12, ou en aval, vers l'équipement. Toutefois, afin de ne pas entraîner des charges de développements non adaptées aux besoins, il est admis que la maintenance fine de l'équipement peut entraîner la reconnexion de la console d'origine 143 dans le cas où elle aurait pu être déconnectée.

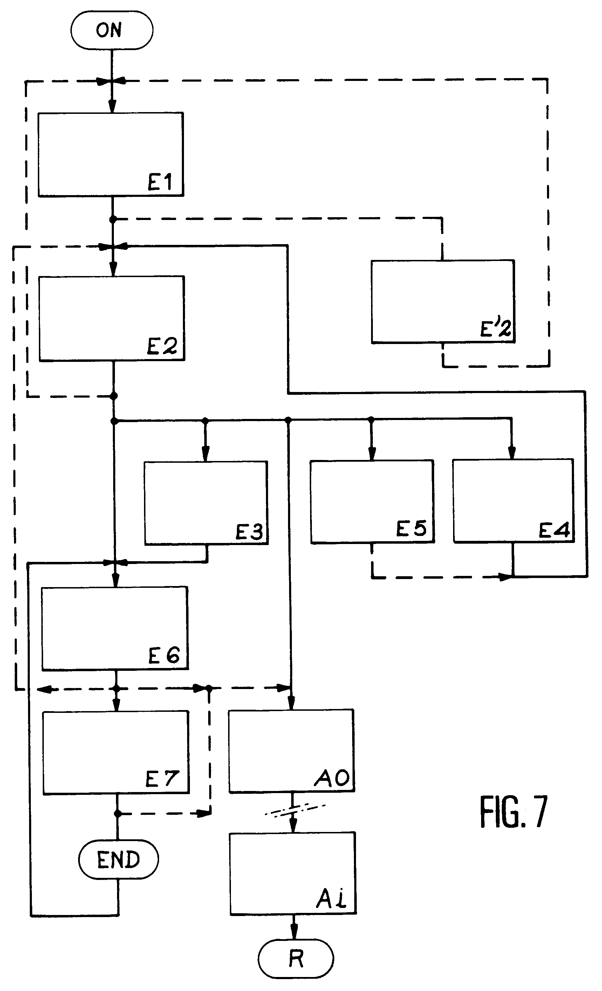

On décrira maintenant l'interface avec l'opérateur et les écrans associés, représentés sur la figure 7. Une unité locale conforme à l'invention a pour objectif de constituer une interface simplifiée avec l'opérateur, qui permet chaque fois que cela est possible d'offrir toutes les fonctionnalités au niveau d'une seule console. On a dit que l'exemple de réalisation du pilotage conforme à l'invention a utilisé comme console de base celle du BM60, à laquelle est associé un lecteur de codes à barres. Sur l'écran de la console sont offerts deux niveaux de langage, à savoir un langage normalisé correspondant à la visibilité qu'à l'opérateur vis-à-vis des différents éléments avec lesquels il est en relation , et un langage dédié à la conduite de l'équipement associé au poste. Le niveau du langage dédié est naturellement fonction de l'équipement et du mode dans lequel il se trouve. Le langage normalisé s'appuie sur les écrans qui vont maintenant être présentés avec leur enchaînement en référence à la figure 7. Ces écrans et leur enchaînement sont directement gérés par l'unité locale associée à l'équipement utilisé. Il est à noter que tous les écrans relatifs à l'unité locale ont pour caractéristique d'être des écrans stables, dont le risque d'évolution est faible.

En référence à la figure 7, on voit que la mise sous tension "ON" de l'unité locale fait apparaître l'écran E1 présentant le menu général de l'unité locale. A l'écran E1 succède en mode normal l'écran E2 présentant le menu général du pilotage. Les autres modes qui ont été présentés précédemment correspondent à des écrans E'2 se regroupant en amont de l'écran E1. A l'écran E2 peuvent succéder plusieurs types d'écrans. Par exemple, on peut envisager un écran E3 concernant l'arrivée de l'opérateur, un écran E4 concernant l'ouverture et la fermeture du poste et un écran E5 concernant les mouvements de l'opérateur. Les postes E4 et E5 se rebouclent en amont de l'écran E2. En cas d'impossibilité, la suite de l'écran E2 ramène à l'état initial de l'unité locale. Cependant, la suite normale de l'écran E2 est l'exécution d'une tâche. La tâche considérée est celle décrite précédemment en relation avec les programmes pièces. Cette tâche considérait le traitement d'un lot de cartes dans un atelier de montage de circuits imprimés. Par exemple, on peut envisager comme premier écran d'exécution un écran E6 de lecture du conteneur du lot. L'écran E6 peut éventuellement intervenir après l'écran E3. L'écran E6 aboutit normalement à un écran E7 affichant les instructions. Cependant, la suite des écrans E2, E6 et E7 peut conduire à un écran A0 d'aléa. Une suite d'écrans d'aléa A1...Ai fournit un retour R à l'écran appelant. L'écran A0 peut aussi être la suite de l'écran E2. Normalement, l'écran E7 génère d'autres écrans jusqu'à la fin END de traitement du lot. A la fin de traitement du lot, on retourne en amont de l'écran E6. Enfin, il se peut que l'on doive retourner en amont de l'écran E2 en sortie de l'écran E6 et d'autres écrans successifs.

## Revendications

1. Procédé de pilotage à partir d'un centre de pilotage (12) d'au moins un équipement (14a-14d) par l'intermédiaire d'un réseau local (11) d'un système de pilotage (10), l'équipement incluant un calculateur (141) pourvu d'une ligne de communication (16, 16'), ledit procédé consistant à disposer une unité locale d'interface (18a-18d) comprenant une unité locale de stockage (181) et un bloc de traitement (180) qui relie la ligne de communication de l'équipement au réseau local par l'intermédiaire d'une ligne de communication directe (19) avec le réseau local et à faire un contrôle du calculateur de l'équipement par l'intermédiaire de la ligne de communication (16, 16'), le contrôle étant fait par le bloc de traitement connecté à un poste de travail local (182) et consistant à attribuer à l'unité locale d'interface la gestion du catalogue des fichiers utilisés par le calculateur de l'équipement, à stocker dans l'unité locale de stockage une copie de fichiers contenus dans le centre de pilotage et/ou à envoyer dans le centre de pilotage des fichiers issus de l'unité locale d'interface, caractérisé en ce que l'unité locale d' interface gère automatiquement le transfert de fichiers entre un ensemble de serveurs de données (123) du centre de pilotage et l'unité locale de stockage, en initialisant, en réponse à l'initialisation d'un traitement par un opérateur, le transfert d'un fichier si le fichier n'est pas présent dans l'unité locale de stockage, et en appliquant une stratégie d'effacement des fichiers stockés dans l'unité locale de stockage qui ont le moins de chance d'être réutilisés dans un avenir proche lorsqu'un problème de place se pose au niveau de l'unité locale de stockage.

2. Procédé selon la revendication 1, caractérisé en ce que le stockage est fait en priorité dans une unité de stockage (142) de l'équipement et accessoirement dans l'unité locale de stockage.

3. Procédé selon la revendication 1 ou 2, caractérisé en ce que le calculateur de l'équipement (14c) ayant une seconde ligne de communication directe (17) avec le réseau local, le contrôle du calculateur par le bloc de traitement comprend la préparation d'un transfert par l'unité locale d'interface et la réalisation de ce transfert par l'intermédiaire de ladite seconde ligne de communication directe.

4. Procédé selon l'une des revendications 1 à 3, caractérisé en ce qu'il consiste à transférer par l'intermédiaire du réseau local (11) des données entre le bloc de traitement (180) de l'unité locale d'interface et le calculateur de pilotage (121) du centre de pilotage (12) et/ou entre le bloc de traitement et un ensemble de moniteurs dédiés à des applications locales (125) du centre de pilotage.

5. Procédé selon l'une des revendications 1 à 4, caractérisé en ce qu'il consiste à connecter la ligne de communication directe (19) avec le réseau local (11) au calculateur de l'équipement (14d) et en ce que le contrôle du calculateur par l'unité locale d'interface consiste à aiguiller dans le calculateur les données entre un premier trajet entre l'unité locale d'interface (18d) et le calculateur de l'équipement par l'intermédiaire de la ligne de communication (16') de l'équipement, et un second trajet entre le bloc de traitement et le réseau local par l'intermédiaire de la ligne de communication (16') et de la ligne de communication directe.

6. Procédé selon la revendication 5, caractérisé en ce que l'aiguillage consiste à incorporer un premier indicateur (P) dans les messages (M) de données (I) émis par le bloc de traitement et un second indicateur (P) dans les messages (M) de données (I) à destination du bloc de traitement.

7. Procédé selon la revendication 5 ou 6, caractérisé en ce qu'il consiste à inclure la liaison logique de terminal (15') dans chacun des premier et second trajets.

8. Procédé selon l'une des revendications 1 à 7, caractérisé en ce qu'il consiste à utiliser un micro-ordinateur comme bloc de traitement.

9. Procédé selon l'une des revendications 1 à 8, caractérisé en ce qu'il consiste à utiliser la ligne de communication (16, 16') comme une ligne asynchrone.

10. Procédé selon l'une des revendications 1 à 9, caractérisé en ce qu'il consiste à utiliser comme réseau local un réseau local industriel normalisé, tel que le réseau MAP.

## Claims

1. A control process based on a control centre (12) for at least one piece of equipment (14a-14d) via a local network (11) of a control system (10), the equipment including a computer (141) provided with a communication line (16, 16'), said process consisting of disposing a local interface unit (18a-18d) comprising a local storage unit (181) and a processing block (180) which connects the communication line of the equipment to the local network via a direct line of communication (19) with the local network and of carrying out a check of the equipment computer via the communication line (16, 16'), the check being carried out by the processing block connected to a local work station (182) and consisting of assigning the management of the catalogue of files used by the equipment computer to the local interface unit, of storing in the local storage unit a copy of files contained in the control centre and/or sending files from the local interface unit to the control centre, characterised in that the local interface unit automatically manages the transfer of files between a set of data servers (123) of the control centre and the local storage unit by initialising, in response to the initialisation of a processing operation by an operator, the transfer of a file if the file is not present in the local storage unit and by applying a strategy for the deletion of files stored in the local storage unit which have the least chance of being re-used in the near future when there is a space problem at the level of the local storage unit.

2. A process according to Claim 1, characterised in that the storage takes place primarily in a storage unit (142) of the equipment and secondarily in the local storage unit.

3. A process according to Claim 1 or 2, characterised in that, the equipment computer (14c) having a second direct line of communication (17) with the local network, the checking of the computer by the processing block comprises the preparation of a transfer by the local interface unit and the realisation of this transfer via said second direct communication line.

4. A process according to one of Claims 1 to 3, characterised in that it consists of transferring, via the local network (11), data between the processing block (180) of the local interface unit and the control computer (121) of the control centre (12) and/or between the processing block and a set of monitors dedicated to local applications (125) of the control centre.

5. A process according to one of Claims 1 to 4, characterised in that it consists of connecting the line of direct communication (19) with the local unit (11) to the equipment computer (14d), and in that the checking of the computer by the local interface unit consists of routing, within the computer, data between a first path between the local interface unit (18d) and the equipment computer via the communication line (16') of the equipment, and a second path between the processing block and the local network via the communication line (16') and the direct communication line.

6. A process according to Claim 5, characterised in that the routing consists of incorporating a first indicator (P) into the messages (M) of data (I) emitted by the processing block and a second indicator (P) into the messages (M) of data (I) going to the processing block.

7. A process according to Claim 5 or 6, characterised in that it consists of including the terminal logic connection (15') in each of the first and second paths.

8. A process according to one of Claims 1 to 7, characterised in that it consists of using a micro-computer as a processing block.

9. A process according to one of Claims 1 to 8, characterised in that it consists of using the communication line (16, 16') as an asynchronous line.

10. A process according to one of Claims 1 to 9, characterised in that it consists of using, as a local network, a standardised industrial local network, such as the MAP network.

## Patentansprüche

1. Verfahren zum Steuern wenigstens einer Anlage (14a-14d) durch ein Steuerzentrum (12) über ein lokales Netz (11) eines Steuersystems (10), wobei die Anlage einen Rechner (141) enthält, der mit einer Verbindungsleitung (16, 16') versehen ist, wobei das Verfahren darin besteht, eine lokale Schnittstelleneinheit (18a-18d) vorzusehen, die eine lokale Speichereinheit (181) und einen Verarbeitungsblock (180) enthält, der die Verbindungsleitung der Anlage mit dem lokalen Netz über eine direkte Verbindungsleitung (19) des lokalen Netzes verbindet, sowie eine Steuerung des Rechners der Anlage über die Verbindungsleitung (16, 16') auszuführen, wobei die Steuerung durch den mit einer lokalen Arbeitsstation (182) verbundenen Verarbeitungsblock ausgeführt wird und darin besteht, der lokalen Schnittstelleneinheit die Verwaltung der Liste von Dateien zu übertragen, die vom Rechner der Anlage verwendet werden, in der lokalen Speichereinheit eine Kopie der im Steuerzentrum enthaltenen Dateien zu speichern und/oder von der lokalen Schnittstelleneinheit ausgegebene Dateien in das Steuerzentrum zu schicken, dadurch gekennzeichnet, daß die lokale Schnittstelleneinheit automatisch die Übertragung von Dateien zwischen einer Gruppe von Daten-Servern (123) des Steuerzentrums und der lokalen Speichereinheit leitet, indem sie als Antwort auf die Initialisierung einer Verarbeitung durch eine Bedienungsperson die Übertragung einer Datei initialisiert, falls die Datei in der lokalen Speichereinheit nicht vorhanden ist, und indem sie dann, wenn auf Höhe der lokalen Speichereinheit ein Platzproblem entsteht, eine Strategie zum Löschen von Dateien anwendet, die in der lokalen Speichereinheit gespeichert sind und für die die geringste Aussicht besteht, in naher Zukunft erneut verwendet zu werden.

2. Verfahren gemäß Anspruch 1, dadurch gekennzeichnet, daß die Speicherung vorrangig in einer Speichereinheit (142) der Anlage und nebenbei in der lokalen Speichereinheit vorgenommen wird.

3. Verfahren gemäß Anspruch 1 oder 2, dadurch gekennzeichnet, daß dann, wenn der Rechner der Anlage (14c) eine zweite direkte Verbindungsleitung (17) des lokalen Netzes besitzt, die Steuerung des Rechners durch den Verarbeitungsblock die Vorbereitung einer Übertragung durch die lokale Schnittstelleneinheit und die Ausführung dieser Übertragung über diese zweite direkte Verbindungsleitung umfaßt.

4. Verfahren gemäß einem der Ansprüche 1 bis 3, dadurch gekennzeichnet, daß es darin besteht, Daten zwischen dem Verarbeitungsblock (180) der lokalen Schnittstelleneinheit und dem Steuerrechner (121) des Steuerzentrums (12) und/oder zwischen dem Verarbeitungsblock und einer Gruppe von Monitoren, die lokalen Anwendungen (125) des Steuerzentrums gewidmet sind, über das lokale Netz (11) zu übertragen.

5. Verfahren gemäß einem der Ansprüche 1 bis 4, dadurch gekennzeichnet, daß es darin besteht, die direkte Verbindungsleitung (19) des lokalen Netzes (11) mit dem Rechner der Anlage (14d) zu verbinden und daß die Steuerung des Rechners durch die lokale Schnittstellenschaltung darin besteht, im Rechner die Daten wahlweise entweder auf einen ersten Weg zwischen der lokalen Schnittstelleneinheit (18d) und dem Rechner der Anlage über die Verbindungsleitung (16') der Anlage oder auf einen zweiten Weg zwischen dem Verarbeitungsblock und dem lokalen Netz über die Verbindungsleitung (16') und die direkte Verbindungsleitung zu leiten.

6. Verfahren gemäß Anspruch 5, dadurch gekennzeichnet, daß das wahlweise Leiten darin besteht, in die Nachrichten (M) von Daten (I), die vom Verarbeitungsblock ausgesandt werden, einen ersten Zeiger (P) einzubauen und in die Nachrichten (M) von Daten (I), die für den Verarbeitungsblock bestimmt sind, einen zweiten Zeiger (P) einzubauen.

7. Verfahren gemäß Anspruch 5 oder 6, dadurch gekennzeichnet, daß es darin besteht, sowohl in den ersten Weg als auch in den zweiten Weg die logische Verbindung des Endgerätes (15') aufzunehmen.

8. Verfahren gemäß einem der Ansprüche 1 bis 7, dadurch gekennzeichnet, daß es darin besteht, als Verarbeitungsblock einen Mikrocomputer zu verwenden.

9. Verfahren gemäß einem der Ansprüche 1 bis 8, dadurch gekennzeichnet, daß es darin besteht, die Verbindungsleitung (16, 16') als asynchrone Leitung zu verwenden.

10. Verfahren gemäß einem der Ansprüche 1 bis 9, dadurch gekennzeichnet, daß es darin besteht, als lokales Netz ein genormtes industrielles lokales Netz wie etwa das MAP-Netz zu verwenden.
